# EUROPEAN PATENT SPECIFICATION

(11) **EP 0 572 469 B1**
(45) Date of publication and mention of the grant of the patent: **14.08.1996**
(21) Application number: 92904911.2
(22) Date of filing: 14.02.1992
(51) Int. Cl.: A01K 63/04

(54) **A METHOD AND SYSTEM FOR REMOVING SLUDGE FROM A FISH FARM POND**
Verfahren und Vorrichtung zum Räumen von Schlamm aus einem Fischzuchtbecken
PROCEDE ET DISPOSITIF D'ENLEVEMENT DES BOUES D'UN BASSIN DE PISCICULTURE

(30) Priority: 14.02.1991 FI 910716
(43) Date of publication of application: 08.12.1993
(73) Proprietor: VIIKKI, Paavo Antero, SF-41370 Kuusa (FI)
(72) Inventor: VIIKKI, Paavo Antero, SF-41370 Kuusa (FI)
(74) Representative: Solf, Alexander, Dr.
(86) International application number: FI9200041
(87) International publication number: WO9214357

(56) References cited:
- GB-A- K4 330
- NO-B- 159 512
- SE-B- 449 155
- US-A- 4 118 075

## Description

The invention relates to a fish farm pond sludge removal system, consisting of a net bag beneath which is a collection cone and a collection tank Such a system is known for example from SE-B-449,155. The invention pertains also a method of removing sludge from a fish farm pond using such a fish farm pond sludge removal system.

Fish farming takes place in net bags designed for this purpose, which are suspended from buoys. There are typically several net bags in the same fish farm pond. Fish fodder is thrown on top of the net bags and begins to drop to the bottom. The fish eat most of it with only a small amount dropping to the bottom. A great problem is formed by the fish faeces, which drop to the bottom, unless they are collected first. Both the fish fodder and the faeces partly dissolve in water, on account of which such known methods in which the bottom of the fish pond is dredged at regular intervals are not advantageous, because of the excessive delay.

In order to reduce the load on the environment systems have been developed, in which collection cones are placed beneath the net bags, and the sludge is led from them to a collection tank. An output pipe runs from each of the collection tanks through which the tank sludge is sucked by a pump to a sludge pond or other reservoir. In practice the systems have not operated satisfactorily for the following reasons: first of all the suction has not been evenly distributed, in which case part of the tank has remained nearly without suction, secondly during removal water is added to the sludge, when it is further diluted, and thirdly blocks have appeared in the pipe network, which have totally prevented the system from operating.

The object of this invention is to create a new type of efficient and reliable fish farm pond sludge removal system and a method of removing sludge from a fish farm pond using such a fish farm pond sludge removal system without the above-mentioned deficiencies and problems.

The object is solved by a fish farm pond sludge removal system according to claim 1 and by a method of removing sludge from a fish farm pond according to claim 5. By using high pressure to empty the pond the pressure difference can be considerably greater than when using vacuum. Secondly, air is the most advantageous pressure medium, in which case the amount of water to be removed can be limited to the volume of the collection tanks.

Other advantages and forms of application of the invention appear in connection with the examples of application presented later.

In what follows the invention is described by reference to the accompanying illustrations, which show various forms of application of the invention.

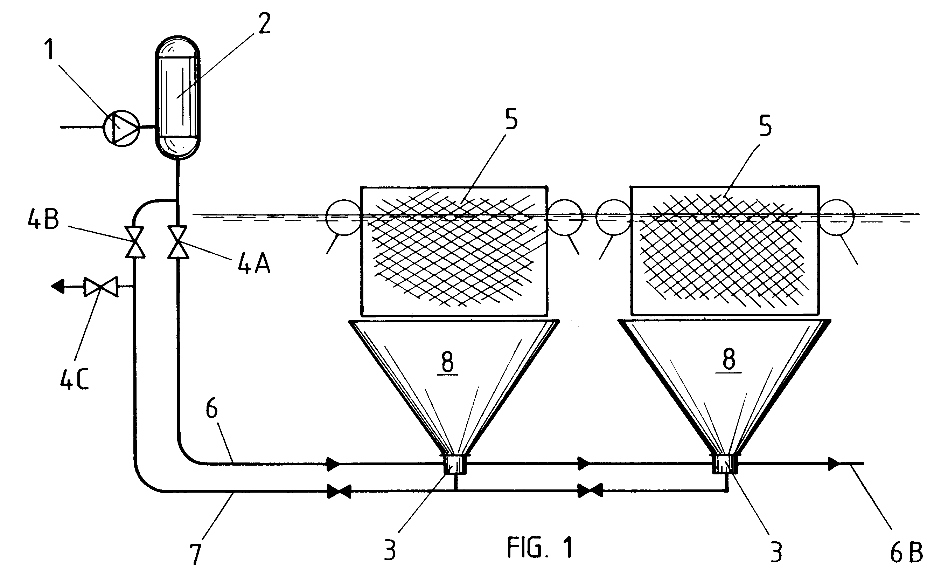

- Figure 1: shows a schematic diagram of the sludge removal system of a fish farm pond.
- Figure 2: shows a collection tank with its valves.
- Figure 3: shows one improved system.

A fish farm pond contains several net bags 5 for the fish. Beneath these are located collection cones 8, which direct the sludge to the collection tank 3. On the surface of the ground there is a pressure tank 2, driven by compressor 1, which is stored full of compressed air for carrying out emptying. Feed line 6 leads from pressure tank 2 to the first collection tank 3, which is connected to the following tank 3. Tanks 3 are connected to each other and the final tank is connected to output pipe 6B, which leads the sludge to be removed to a sludge removal pond or tank. A control line 7 is also led from pressure 2, by means of which the operating devices of tanks 3 are controlled. Lines 6 and 7 include valves 4a, 4b, 4c, by means of which the emptying is controlled.

At first valve 4b of control line 7 is opened, when the operating devices close the cones 8 of the collection tanks 3. After this valve 4a of feed line 6 can be opened, when compressed air is able to empty the tanks 3 sequentially. After emptying the emptying valve 4c of control line 7 is opened, when the control line is de-pressurized and the valves of tanks 3 open.

In practice it is sufficient if the tanks 3 are emptied once a day, even though the fish are fed four times during this period. The water is not able to dissolve an appreciable amount of sludge nor has the biological disintegration of the sludge been able to really get under way.

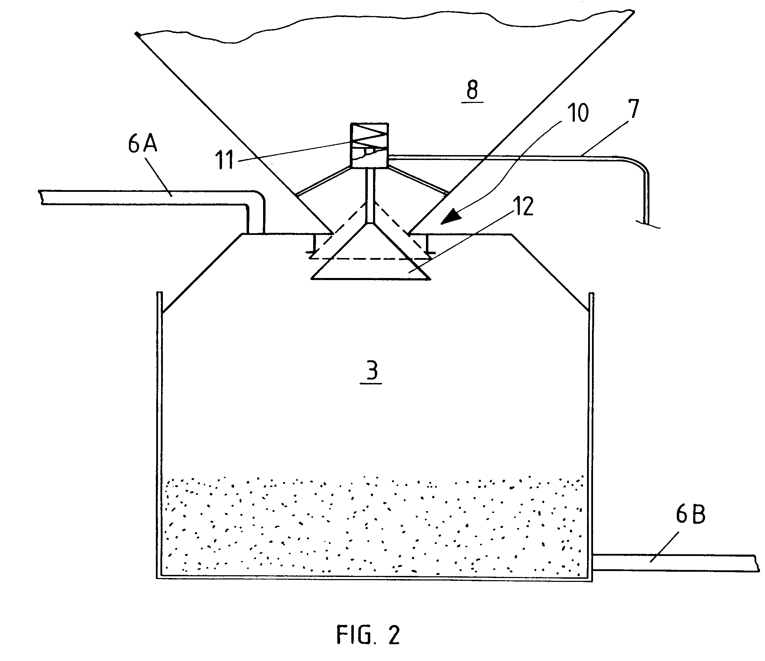

A more detailed depiction of collection tank 3 is shown in Figure 2. The collection cone 8 leads the sludge through connection 10 to collection tank 3. Valve 12 is located in connection 10, it being operated by pneumatic operating device 11. Pneumatic operating device 11 consists of a return-spring loaded piston, to one side of which compressed air is led from control line 7. The Figure shows the position of the valve is shown by a broken line when compressed air is being fed to the operating device. The spring returns the valve 12 to the open position.

The input pipe 6A of the input line 6 is connected to the upper part of tank 3 and output pipe 6B is connected to the lower part of the tank.

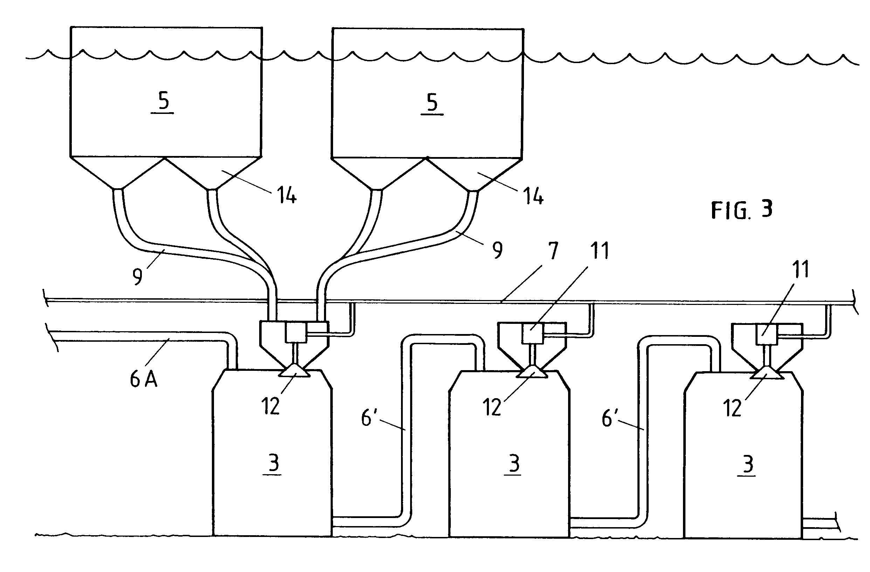

Figure 3 shows the system at its most advantageous. The Figure is to that extent diagrammatic that the size of the net bags 5 is naturally relatively much greater than the tanks 3 than is shown in the Figure. The size of the tanks here is only about 30 litres, whereas the net bags may have a bottom surface area of 3 m x 3 m or even 10 m x 10 m.

The system in accordance with the invention makes it possible to feed a single collection tank 3 from several collection cones 14, which are connected by pipe 9 to the collection tank 3 in front of valve 12, Figure 3. In addition to this the collection tanks are in a series, as has been described above, in which case all the removal of sludge from the fish farm ponds takes place through a single system. Here the collection tanks are connected to each other by an intermediate line 6' and the input 6A is connected to the first collection tank 3 and the output pipe 6B is connected to the last collection tank. Here too the operating devices 11 of the valves 12 are connected to the control line 7. Here too both the control of the operating devices and the removal of the sludge take place pneumatically.

## Claims

1. A fish farm pond sludge removal system consisting of a net bag (5) beneath which is a collection cone (8) and a collection tank (3) with an intermediate input connection (10) connected to the lower end of the collection cone (8), and an output line (6B) which is connected to the lower part of the collection tank (3),
**characterized** in that
the collection tank (3) is connected to an input line (6A) and the intermediate input connection (10) includes a valve (12) equipped with an operating device (11) which is in turn connected to a control line (7) adapted to receive a pressure medium to cause said operating device (11) to close the valve (12).

2. A sludge removal system in accordance with claim 1,
**characterized** in that
the operating device (11) is pneumatic and the system includes a control line (7) to feed compressed air to the operating device (11).

3. A sludge removal system in accordance with claim 1 or 2,
**characterized** in that
the system includes several collection cones (14), which are connected to the same collection tank (3) by means of connecting pipes (9).

4. A sludge removal system in accordance with one of claims 1 to 3,
**characterized** in that
the system includes several sequential collection tanks (3), between which there is an intermediate line (6') connected to the lower part of the preceding collection tank and to the upper part of the following collection tank (3), the first tank being connected to the input line (6A) of the pressure medium and the last tank to the output line (6B).

5. A method of removing sludge from a fish farm pond using the system of claim 1, in which the sludge is led from a net bag (5) through a collection cone (8) to a collection tank (3) via an intermediate input connection (10) with the sludge being removed from the collection tank (3) to an output line (6B),
**characterized** in that
the intermediate input connection (10) is closed during removal of the sludge and a pressure medium is led to the collection tank (3) via an input line (6A) in order to remove the sludge from the lower part of the collection tank (3) via said output line (6B).

6. A method in accordance with claim 5,
**characterized** in that
air is used as the pressure medium.

7. A method in accordance with claim 5 or 6
**characterized** in that
the sludge and pressure medium is led through two or more sequential collection tanks (3) to the output line (6B).

## Patentansprüche

1. Fischfarmweiher-Schlammbeseitigungssystem, bestehend aus einem Netzsack (5), unterhalb von welchem sich ein Sammelkonus (8) und ein Sammeltank (3) befinden, der mit einer Zwischeneintragverbindung (10) mit dem unteren Ende des Sammelkonus (8) verbunden ist, und aus einer Austragleitung (6B), die mit dem unteren Teil des Sammeltanks (3) verbunden ist, dadurch gekennzeichnet, daß der Sammeltank (3) mit einer Eintragleitung (6A) verbunden ist, und die Zwischeneintragverbindung (10) ein Ventil (12) ausweist, das mit einer Betätigungsvorrichtung (11) versehen ist, die ihrerseits mit einer Steuerleitung (7) verbunden ist, die dazu ausgelegt ist, ein Druckmedium aufzunehmen, um die Betätigungsvorrichtung (11) zu veranlassen, das Ventil (12) zu schließen.

2. Schlammbeseitigungssystem nach Anspruch 1, dadurch gekennzeichnet, daß die Betätigungsvorrichtung (11) pneumatisch ist und das System eine Steuerleitung (7) aufweist, um Druckluft zur Betätigungsvorrichtung (11) zuzuführen.

3. Schlammbeseitigungssystem nach Anspruch 1 oder 2, dadurch gekennzeichnet, daß das System mehrere Sammelkonen (14) aufweist, die mit demselben Sammeltank (3) mittels Verbindungsrohren (9) verbunden sind.

4. Schlammbeseitigungssystem nach einem der Ansprüche 1 bis 3, dadurch gekennzeichnet, daß das System mehrere aufeinanderfolgende Sammeltanks (3) aufweist, zwischen denen eine Zwischenleitung (6') vorhanden ist, die mit dem unteren Teil des vorausgehenden Sammeltanks und mit dem oberen Teil des nachfolgenden Sammeltanks (3) verbunden ist, wobei der erste Tank mit der Eintragleitung (6A) für das Druckmedium und dem letzten Tank zur Austragleitung (6B) verbunden ist.

5. Verfahren zur Schlammbeseitigung aus einem Fischfarmweiher unter Verwendung des Systems nach Anspruch 1, bei dem der Schlamm von einem Netzsack (5) durch einen Sammelkonus (8) zu einem Sammeltank (3) über eine Zwischeneintragverbindung (10) geführt wird, wobei der Schlamm aus dem Sammeltank (3) zu einer Austragleitung (6B) ausgetragen wird, dadurch gekennzeichnet, daß die Zwischeneintragverbindung (10) während des Austragens des Schlamms geschlossen ist, und ein Druckmedium zum Sammeltank (3) über eine Eintragleitung (6A) geführt wird, um den Schlamm vom unteren Teil des Sammeltanks (3) über die Austragleitung (6A) auszutragen.

6. Verfahren nach Anspruch 5, dadurch gekennzeichnet, daß Luft als das Druckmedium verwendet wird.

7. Verfahren nach Anspruch 5 oder 6, dadurch gekennzeichnet, daß der Schlamm und das Druckmedium durch zwei oder mehr aufeinanderfolgende Sammeltanks (3) zu der Austragleitung (6B) geführt werden.

## Revendications

1. Dispositif d'enlèvement des boues d'un bassin de pisciculture, comprenant un sac à mailles (5) sous lequel sont agencés un cône collecteur (8) et une cuve collectrice (3), une ligne intermédiaire d'entrée (10) étant reliée à l'extrémité inférieure du cône collecteur (8), et une ligne d'évacuation (6B) étant reliée à la partie inférieure de la cuve collectrice (3), caractérisé en ce que la cuve collectrice (3) est reliée à une ligne d'entrée (6A), et que la ligne intermédiaire d'entrée (10) comprend une vanne (12) équipée d'un moyen d'actionnement (11) qui est à son tour relié à une ligne de commande (7) apte à recevoir un agent sous pression pour induire ledit moyen d'actionnement (11) à fermer la vanne (12).

2. Dispositif d'enlèvement de boues selon la revendication 1,
caractérisé en ce que le moyen d'actionnement (11) est pneumatique, et que le dispositif comprend une ligne de commande (7) pour alimenter le moyen d'actionnement (11) en air comprimé.

3. Dispositif d'enlèvement de boues selon la revendication 1 ou 2,
caractérisé en ce que le dispositif comprend plusieurs cônes collecteurs (14), tous reliés à la même cuve collectrice (3) au moyen de tuyaux de connexion (9).

4. Dispositif d'enlèvement de boues selon l'une des revendications 1 à 3,
caractérisé en ce que le dispositif comprend plusieurs cuves collectrices (3) consécutives entre lesquelles une ligne intermédiaire (6') est reliée à la partie inférieure de la cuve collectrice précédente et à la partie supérieure de la cuve collectrice suivante (3), la première cuve étant reliée à la ligne d'entrée (6A) de l'agent sous pression et la dernière cuve étant reliée à la ligne d'évacuation (6B).

5. Procédé d'enlèvement des boues d'un bassin de pisciculture utilisant le dispositif selon la revendication 1, dans lequel les boues sont acheminées d'un sac à mailles (5) à travers un cône collecteur (8) vers une cuve collectrice (3) en passant par une ligne d'entrée intermédiaire (10), les boues étant évacuées de la cuve collectrice (3) vers une ligne d'évacuation (6B), caractérisé en ce que la ligne intermédiaire d'entrée (10) est fermée lorsqu'on évacue les boues, et qu'un agent sous pression est acheminé vers la cuve collectrice (3) à travers une ligne d'entrée (6A) en vue d'évacuer les boues de la partie inférieure de la cuve collectrice (3) à travers ladite ligne d'évacuation (6B).

6. Procédé selon la revendication 5,
caractérisé en ce qu'on utilise de l'air en tant qu'agent sous pression.

7. Procédé selon la revendication 5 ou 6,
caractérisé en ce que les boues et l'agent sous pression sont acheminés à travers deux ou davantage de cuves collectrices (3) consécutives, vers la ligne d'évacuation (6B).
